# NEUE EUROPÄISCHE PATENTSCHRIFT

(11) **EP 2 408 865 B2**
(45) Veröffentlichungstag und Bekanntmachung des Hinweises auf die Entscheidung über den Einspruch: **11.10.2017**
(45) Hinweis auf die Patenterteilung: 02.04.2014
(21) Anmeldenummer: 10706163.2
(22) Anmeldetag: 27.02.2010
(51) Int. Cl.: C09C 1/36, C09C 3/08, C09C 3/10, B82Y 30/00, C09C 1/42, C09C 1/48, C09C 1/24

(54) **PIGMENT ZUR LASERMARKIERUNG**
PIGMENT FOR LASER MARKING
PIGMENT POUR MARQUAGE AU LASER

(30) Priorität: 18.03.2009 DE 102009013430; 30.11.2009 DE 102009056093
(43) Veröffentlichungstag der Anmeldung: 25.01.2012
(73) Patentinhaber: Merck Patent GmbH, 64293 Darmstadt (DE)
(72) Erfinder: EDLER, Gerhard, 65468 Trebur (DE); KNIESS, Helge Bettina, 64380 Rossdorf (DE); BERNHARDT, Klaus, 64823 Gross-Umstadt (DE)
(86) Internationale Anmeldenummer: PCT/EP2010/001232
(87) Internationale Veröffentlichungsnummer: WO 2010/105735

(56) Entgegenhaltungen:
- EP-A1- 0 330 869
- EP-A1- 0 753 536
- EP-A1- 1 215 233
- EP-A1- 2 050 720
- EP-A2- 0 190 997
- WO-A1-2004//050766
- DE-A1- 19 618 569
- DE-A1- 19 803 550
- DE-A1-102004 045 305
- DE-A1-102004 050 557
- US-A- 3 839 064
- US-A- 5 562 978

## Beschreibung

Die vorlegende Erfindung betrifft ein intrinsisch markierbares Laserpigment in Form einer Präparation einer reduzierbaren Metallverbindung, ein Verfahren zu dessen Herstellung sowie dessen Verwendung in anorganischen Systemen, wie z.B. Wasserglas oder auf Wasserglas basierenden Beschichtungen, und organischen Polymeren, insbesondere Kunststoffen, Lacken, Automobillacken, Pulverlacken, Druckfarben, Papierbeschichtungen und Papiermassen.

Die Kennzeichnung von Wirtschaftsgütern mittels Laserstrahlung ist mittlerweile eine gängige Technologie in fast allen Industriezweigen. So müssen häufig z.B. Produktionsdaten, Chargennummern, Verfallsdaten, Barcodes, Firmenlogos, Seriennummern, etc. auf Kunststoffen oder Kunststofffolien aufgebracht werden.

Der für eine Kennzeichnung notwendige Kontrast wird dabei bevorzugt nach den folgenden Verfahren erzeugt:
1. Abtragen von Schichten unterschiedlicher Einfärbung
   Von Nachteil ist, dass es sich hier um ein sehr aufwendiges Verfahren handelt, welches nur in einem begrenzten Umfang anwendbar ist.
2. Carbonisierung einer organischen Matrix
   Dies ist das derzeit am häufigsten eingesetzte Verfahren. Die Carbonisierung wird dabei entweder durch Absorption der Laserstrahlung in der organischen Matrix selbst oder durch Absorption an zugesetzten Absorbern hervorgerufen. In beiden Fällen wird die Carbonisierung des Polymermaterials durch einen kurzzeitigen Hitzeschock hervorgerufen, welcher die umgebende Matrix verbrennt. Dabei ist das Vermögen der Matrix beim Verbrennen ausreichend Kohlenstoff zu bilden von entscheidender Bedeutung für das Markierergebnis. Somit hat das eingesetzte Polymer bzw. die Rezeptur der Matrix einen starken Einfluss auf das Markierergebnis. Diese Abhängigkeit führt in der Regel zu umfangreichen Vorversuchen zur Ermittlung eines für die jeweilige Anwendung ausreichenden Markierergebnisses. Bei Änderungen in der Zusammensetzung und vielfach auch schon bei Schwankungen der Rohstoffqualität müssen die geeigneten Beschriftungsparameter stets erneut bestimmt werden.
3. Farbwechsel von zugesetzten Pigmenten
   Um der vorgenannten Abhängigkeit zu entgehen, wird seit längerem schon versucht Pigmente bzw. Additive zu entwickeln, welche bei Laserbeschuss selbst einen Farbwechsel durchführen (intrinsisch markieren). Solche Additive erzeugen eine Markierung nahezu unabhängig von der umgebenden Matrix. Sie sind daher in allen Kunststoffen einsetzbar. Auch in dünnen Schichten wie Beschichtungen, Lacken und Drucken sind Markierungen möglich ohne die Schichten signifikant zu schädigen. Produkte mit dieser Eigenschaft sind jedoch bisher entweder auf der Basis von Schwermetallverbindungen aufgebaut oder lediglich in der Literatur beschrieben ohne den Einzug in die industrielle Praxis gefunden zu haben.

Aus der US 5,562,978 sind anorganische Partikel mit Polymerbeschichtung bekannt, wobei die Beschichtung 0,1 bis 8 Gew % des Gewichtes der anorganischen Partikel beträgt und aus Nylon 6, Polyester, einem Polyester-Oligomeren, Polyethylen, Acrylamid, Melamin-Formaldehyd, Vinylalkohol, Polymer enthaltend Polyethoxylat-Ketten, Polystyrol, verzweigten, mit Maleinsäureanhydrid modifizierten Olefinen, Zellulose, Zelluloseether und Gemischen daraus ausgewählt ist.

US 3,839,064 beschreibt Opazität verleihende Pigmentpartikel, welche aus diskreten, sphärischen Mikrokapseln bestehen, die eine feste, polymere Schale und einen darin befindlichen festen, organischen, polymeren Kern aufweisen, wobei im Kern anorganische Pigmentpartikel dispergiert sind und Kern und Schale aus unterschiedlichen Polymermaterialien bestehen.

Aufgabe der vorliegenden Erfindung ist es daher ein intrinsisch markierendes Additiv für die Lasermarkierung zu finden, dass unter Einwirkung von Laserlicht sehr gute Markierergebnisse, insbesondere kontrastreiche und scharfe Markierungen, liefert und gleichzeitig frei von Schwermetallen ist und im industriellen Maßstab hergestellt werden kann.

Aufgabe der vorliegenden Erfindung ist es ebenfalls, ein Verfahren zur Herstellung eines intrinsisch markierenden Laseradditivs zur Verfügung zu stellen.

Eine weitere Aufgabe der Erfindung besteht darin, die Verwendung eines solchen Laseradditivs aufzuzeigen.

Überraschenderweise wurde gefunden, dass feinteilige Metallverbindungen, die durch die Laserstrahlung zu farbigen Metallverbindungen niedriger Oxidationsstufe bzw. bis zum Metall reduziert werden, hervorragend als intrinsisch markierende Additive für die Lasermarkierung geeignet sind. Insbesondere geeignet sind möglichst farbneutrale Oxide von Metallen, wobei letztere für die universelle Einsetzbarkeit nicht toxisch sein sollten und auch keine toxischen Reaktionsprodukte bei der Reduktion bilden sollten.

Gegenstand der vorliegenden Erfindung ist ein intrinsisch lasermarkierbares Pigment, das sich dadurch auszeichnet, dass das Pigment mit einer Teilchengröße von 0,01 - 200 µm in Form einer Präparation vorliegt, die eine oder mehrere reduzierbare Metallverbindungen und ein Reduktionsmittel gemäß Anspruch 1 enthält.

Gegenstand der vorliegenden Erfindung ist ebenso ein Verfahren zur Herstellung des erfindungsgemäßen intrinsisch lasermarkierbaren Pigmentes, wobei eine oder mehrere reduzierbare Metallverbindungen mit einem Reduktionsmittel teilweise oder vollständig beschichtet werden oder ein Reduktionsmittel mit einer oder mehreren reduzierbaren Metallverbindungen teilweise oder vollständig beschichtet wird.

Gegenstand der vorliegenden Erfindung ist auch die Verwendung des erfindungsgemäßen Laserpigments in organischen Polymeren, insbesondere in Kunststoffen, Kunststofffolien, Lacken, Automobillacken, Pulverlacken, Druckfarben, Papierbeschichtungen und Papiermassen, sowie in anorganischen Systemen, wie z.B. Wasserglas oder auf Wasserglas basierenden Beschichtungen.

Gegenstand der Erfindung sind weiterhin auch die anorganischen Systeme und organischen Polymersysteme, die das erfindungsgemäße Laserpigment enthalten.

Unter Einwirkung von Laserlicht zeigt das mit dem erfindungsgemäßen Laserpigment dotierte Polymer eine dunkle Markierung mit hohem Kontrast und ausgeprägter Kantenschärfe auf hellem oder farbigem Grund.

Als vorteilhaft mit Hinblick auf die bei der Reduktion entstehenden Nebenprodukte haben sich die in Anspruch 1 genannten Metalloxide oder Metalloxidgemische als reduzierbare Metallverbindung gezeigt.

Die Metalloxide können dabei in dotierter oder undotierter Form vorliegen.

Ein schwermetallfreies Metalloxid, das sich sehr gut zu farbigen Metallsuboxiden bzw. bis zum Metall reduzieren lässt, ist beispielsweise Titandioxid, welches ebenfalls in dotierter oder undotierter Form vorliegen kann.

Es ist bekannt, dass sich Titandioxid unter Einwirkung von Wasserstoff bei erhöhter Temperatur zu einem stabilen, bläulich schwarzen Suboxid der Formel TiOₓ reduzieren lässt, wobei x kleiner als 2 und größer als 1 ist.

Einem Laserpigment oder Laseradditiv steht jedoch bei seinem bestimmungsgemäßen Gebrauch innerhalb der Polymermatrix, z.B. einem Kunststoff, in der Regel kein beweglicher Reaktionspartner wie bei der oben erwähnten Wasserstoffreduktion zur Verfügung. Es handelt sich vielmehr um eine Reaktion zwischen Feststoffen. Daher müssen die Reaktionspartner in engem Kontakt zueinander stehen um in der kurzen Einwirkungszeit des Laserbeschusses eine genügende Menge an Reaktionsprodukt bilden zu können, welche für eine kontrastreiche Markierung erforderlich ist. Dies wird erfindungsgemäß erreicht, indem man die reduzierbare Metallverbindung, vorzugsweise das Metalloxid oder Metalloxidgemisch, mit einem reduzierenden Agens umhüllt oder ein reduzierendes Agens mit einer reduzierbaren Metallverbindung, vorzugsweise einem Metalloxid oder Metalloxidgemisch, beschichtet. Als reduzierendes Agens eignen sich dabei entweder alle in Anspruch 1 genannten Stoffe, die leicht zu oxidieren sind und sich auf der Oberfläche einer Metallverbindung, vorzugsweise eines Metalloxids oder Metalloxidgemisches, niederschlagen lassen, oder die sich als Teilchen mit einer reduzierbaren Metallverbindung, vorzugsweise mit einem Metalloxid oder Metalloxidgemisch, umhüllen lassen.

Das erfindungsgemäße Laserpigment besteht im Wesentlichen aus zwei Bestandteilen:
1. mindestens einer Metallverbindung, vorzugsweise einem Metalloxid oder einem Metalloxidgemisch, die sich leicht reduzieren lässt,
   und
2. mindestens einem Reduktionsmittel, gemäß Anspruch 1.

Von Bedeutung hierbei ist, dass die Metallverbindung mit dem Reduktionsmittel einen direkten bzw. innigen Kontakt hat, z.B. durch Beschichtung der Metallverbindung mit dem Reduktionsmittel oder durch Beschichtung des Reduktionsmittels mit der Metallverbindung.

Das jeweils zu beschichtende Material liegt dabei in partikulärer Form vor.

Wird die reduzierbare Metallverbindung mit einem Reduktionsmittel beschichtet, liegt sie in Form trägerfreier Partikel oder als Beschichtung auf einem Träger vor. Dabei ist es selbstverständlich, dass nicht nur jeweils ein einzelner Partikel, sondern auch eine Gruppe aus mehreren Partikeln gleichzeitig mit dem Reduktionsmittel beschichtet werden kann, so dass sich das erfindungsgemäße Laserpigment sowohl aus einem einzigen beschichteten Partikel als auch aus einer Gruppe von Partikeln, die mit der gemeinsamen Beschichtung ein Pigment bilden, zusammen setzen kann. Gleiches trifft zu, wenn die reduzierbare Metallverbindung auf einem Träger vorliegt (beispielsweise auf einem Glimmerplättchen, wie unten beschrieben).

Wird das Reduktionsmittel mit einer reduzierbaren Metallverbindung beschichtet, liegt das Reduktionsmittel in Form von Teilchen, also partikulär, vor.

Ist die reduzierbare Metallverbindung ein Metalloxid, wird vorzugsweise Titandioxid, ferner auch B₂O₃, Fe₂O₃ oder SnO₂ eingesetzt. Weitere geeignete reduzierbare Metallverbindungen sind insbesondere Bismutoxid, Silberhalogenide wie z.B. AgCl, aber auch Zinksulfid.

Als dotiertes Metalloxid wird bevorzugt mit Al, Si, Zr, Mn, oder Sb dotiertes Titandioxid eingesetzt.

Bevorzugte Metalloxidgemische sind SnO/SbO, (Sn,Sb)O₂ oder Bismutvanadat.

Wird die reduzierbare Metallverbindung in Form trägerfreier Partikel mit einem Reduktionsmittel beschichtet, spielt die Teilchenform der Metallverbindung für das Markierergebnis nur eine untergeordnete Rolle. Die Metallverbindung kann prinzipiell in allen bekannten Teilchenformen vorliegen, z.B. als Plättchen, Kugeln, Fasern, Würfel, Stäbchen, Quader oder auch als annähernd isotrope Granulate unregelmäßiger Form. Bevorzugt sind isotrope Formen wie Kugeln und Würfel, oder unregelmäßig geformte Granulate.

Solche trägerfreien Partikel weisen erfindungsgemäß eine Teilchengröße (entspricht der Länge der größten Achse) im Bereich von 1 nm bis 1000 nm auf.

Mit zunehmender Teilchengröße wächst dabei das Deckvermögen der (Kern)partikel, weil diese mit zunehmender Größe eingestrahltes Licht in erhöhtem Maße streuen. Je nach Verwendungszweck des erfindungsgemäßen Läseradditivs, d.h. insbesondere abhängig von der Art der eingesetzten per Laser zu markierenden Materialien und der Schichtdicke der Laseradditive enthaltenden Schichten, sind daher jeweils unterschiedliche Bereiche der Teilchengrößen aus dem oben genannten Teilchengrößenbereich bevorzugt.

Ist eine nur geringe Lichtstreuung und damit verbunden ein geringes Deckvermögen der reduzierbaren Metallverbindung erwünscht, sind Teilchengrößen im Bereich von 10 nm bis <100 nm besonders bevorzugt.

Ist dagegen ein höheres Deckvermögen erlaubt oder erwünscht, sind Teilchengrößen im Bereich von 100 nm bis 700 nm besonders bevorzugt.

Weiterhin kann die zu reduzierende Metallverbindung auch auf einem Träger oder einem Gemisch aus unterschiedlichen Trägern aufgebracht sein. Geeignete Trägermaterialien sind alle dem Fachmann bekannten Trägermaterialien, insbesondere transparente oder semitransparente, vorzugsweise plättchenförmige, Substrate. Bevorzugte Träger sind Schichtsilikate. Insbesondere geeignet sind natürlicher und/oder synthetischer Glimmer, Talkum, Kaolin, plättchenförmige Eisen- oder Aluminiumoxide, Glas-, SiO₂-, TiO₂-, plättchenförmige Mischoxide, wie z. B. FeTiO₃, Fe₂TiO₅, Graphitplättchen oder andere vergleichbare Materialien. Vorzugsweise werden Glimmerplättchen, Glasplättchen oder Graphitplättchen eingesetzt. Es können auch Gemische aus unterschiedlichen Trägermaterialien verwendet werden, die mit ein und derselben, oder aber mit verschiedenen Metallverbindungen beschichtet werden.

Vorzugsweise handelt es sich bei den Trägermaterialien um plättchenförmige Substrate, die in der Regel eine Dicke von 0,005 - 10 µm, insbesondere von 0,05 - 5 µm aufweisen. Die Ausdehnung in den beiden anderen Bereichen beträgt üblicherweise 0,01 - 100 µm, vorzugsweise 0,1 - 50 µm, und insbesondere 0,1 - 20 µm.

Bei der Belegung des Trägermaterials mit einer Schicht aus einer reduzierbaren Metallverbindung, insbesondere einer Metalloxidschicht, beträgt die Dicke der Schicht vorzugsweise 1 - 500 nm, insbesondere 5 - 400 nm und ganz besonders bevorzugt 5 - 200 nm.

In einer besonders bevorzugten Ausführungsform besteht das erfindungsgemäße Laserpigment aus einer Präparation aus Glimmerplättchen, die mit einem reduzierbaren Metalloxid, vorzugsweise einem Titandioxid, beschichtet sind, und einem Reduktionsmittel. Die Dicke der Titandioxidschicht beträgt hier vorzugsweise 10 - 200 nm, insbesondere 20 - 100 nm und ganz besonders bevorzugt 40 - 60 nm.

In einer weiteren bevorzugten Ausführungsform enthält das erfindungsgemäße Laserpigment plättchenförmige Pigmente, die auf Glasplättchen basieren und mit einem reduzierbaren Metalloxid belegt sind. Besonders bevorzugt sind Glasplättchen, die mit Titandioxid belegt sind. Sofern ein reduzierbares Metalloxid, wie vorab beschrieben, auf einem Träger aufgebracht ist, beträgt der Anteil an Metalloxid 5 - 80 Gew.%, insbesondere 20 - 70 Gew.% und ganz besonders bevorzugt 40 - 60 Gew.%, bezogen auf das Trägermaterial.

Geeignete Reduktionsmittel sind insbesondere solche, die leicht auf der Oberfläche der zu reduzierenden Metallverbindung, insbesondere des Metalloxids oder des Metalloxidgemisches, teilweise oder vollständig abgeschieden werden können.

Geeignete Reduktionsmittel sind insbesondere Aminoplasten, vorzugsweise ausgewählt aus der Gruppe Melaminharz, Harnstoffharz, Harnstoff/Melaminharz-Gemische und Harnstoff/Formaldehydharz, aber auch Kohlenstoff.

Das Verhältnis von Metallverbindung, insbesondere Metalloxid bzw. Metalloxidgemisch, zu Reduktionsmittel beträgt in der Regel 1-10 : 1, insbesondere 2-8 : 1 und ganz besonders bevorzugt 3-6 : 1.

In einer bevorzugten Ausführungsform ist die zu reduzierende Metallverbindung, vorzugsweise das Metalloxid oder Metalloxidgemisch, die (das) in Form trägerfreier Partikel oder als Beschichtung auf einem Trägermaterial vorliegt, auf ihrer (seiner) Oberfläche mit dem Reduktionsmittel teilweise oder vollständig beschichtet.

Diese Ausführungsform wird nachfolgend beispielhaft für Titandioxidpartikel bzw. für mit Titandioxid beschichtete Trägermaterialien, die beide besonders bevorzugt als zu reduzierende Metallverbindung eingesetzt werden, beschrieben.

Umhüllt man Titandioxidpartikel bzw. mit Titandioxid beschichtete Trägermaterialien beispielsweise mit einem Aminoplasten, vorzugsweise einem Melaminharz, Harnstoffharz, Harnstoff-Formaldehyd-Harz oder einem Harnstoff/Melaminharz-Gemisch, entstehen bei der Bestrahlung des organischen oder anorganischen Polymersystems, dass die so entstandenen Pigmente enthält, mit Laserlicht überraschenderweise ähnliche Reaktions-bedingungen wie bei der Reduktion von Titandioxid mit Wasserstoff in einem Glühofen. Als Folge davon wandelt sich das Titandioxid in ein stabiles blauschwarz gefärbtes Suboxid um. Dabei spielt es keine Rolle in welcher Kristallmodifikation das Titandioxid (Anatas oder Rutil) vorliegt. Auch stabilisierte TiO₂-Variationen, wie z. B. mit Al, Si, Zr, Mn, Sb, usw. stabilisiertes (dotiertes) TiO₂, sowie auf einem der bereits vorher benannten Träger beschichtetes Titandioxid, reagieren analog.

Dieser Reduktionsvorgang des Titandioxids kann bereits unter Bedingungen stattfinden, bei denen die umgebende Polymermatrix noch nicht geschädigt, z.B. carbonisiert, wird. Daher sind mit einem erfindungsgemäß hergestellten Laserpigment auch Markierungen in dünnen Schichten, wie z. B. in Lackierungen und Bedruckungen sowie in Papiermassen und Papierbeschichtungen, möglich. Die zu markierende Polymermatrix, z.B. ein Kunststoff, als solche benötigt prinzipiell keinen carbonisierbaren Anteil für die Lasermarkierung. Daher sind auch nicht organischen Systeme, beispielsweise anorganische Systeme wie Wasserglas oder auf Wasserglas basierende Beschichtungen, mit dem erfindungsgemäßen Pigment markierbar.

Die Umhüllung der Titandioxidpartikel mit einem Reduktionsmittel kann beispielsweise durch nasschemisch säurekatalysierte Polykondensation einer wässrigen Lösung eines Aminoplastharzes in Gegenwart von dispergierten Titandioxidteilchen oder dispergierten Pigmenten, die Titandioxid auf einem Trägermaterial umfassen, erfolgen. Das Kondensat des Aminoplasten wird dabei unlöslich im Wasser und schlägt sich auf der Oberfläche des reinen Titandioxids oder auf der Oberfläche des mit Titandioxid beschichteten Trägermaterials als dünne Schicht nieder.

Analog zu der beschriebenen Beschichtung von Titandioxidteilchen oder von mit Titandioxid beschichteten Trägermaterialien mit einem Reduktionsmittel läuft auch die Beschichtung der vorab genannten anderen reduzierbaren Metallverbindungen mit einem Reduktionsmittel und die Reaktion der derart hergestellten erfindungsgemäßen Laserpigmente unter Laserlicht ab.
Für die Reduktion der Metallverbindung, insbesondere des Metalloxids oder Metalloxidgemisches, mit dem Laser ist dabei eine Menge von 10-50 Gew.% Reduktionsmittel, bezogen auf das Gesamtpigment, insbesondere 10 - 30 Gew.%, erforderlich, wobei das Reduktionsmittel vorzugsweise ein Aminoplast ist.

Prinzipiell sind keine weiteren Zusätze für die Funktion als lasersensitives Pigment erforderlich.

Sofern das reduzierende Agens keine ausreichende Absorption des Lasers besitzt, empfiehlt sich jedoch häufig der Zusatz bzw. der Einbau eines Absorbers in das Laserpigment. Der Absorber kann sowohl dem reduzierenden Agens als auch der zu reduzierenden Metallverbindung, vorzugsweise dem Metalloxid oder Metalloxidgemisch (z. B. dem Titandioxid), zugesetzt werden oder ist in dem erfindungsgemäßen Laserpigment gleichmäßig im reduzierenden Agens und der zu reduzierenden Metallverbindung verteilt.

Geeignete Absorber sind insbesondere alle dem Fachmann bei der Lasermarkierung von Kunststoffen bekannten Absorber, vorzugsweise Ruß, leitfähige Pigmente, wie z.B. Antimon, Sb/Sn-Mischoxide, z. B. Sb₂O₃, (Sn, Sb)O₂, mit (Sn, Sb)O₂ beschichtete Glimmerplättchen, Eisenverbindungen, z. B. Magnetit, Molybdänsulfid, Molybdänoxid, BiOCl, plättchenförmige, insbesondere transparente oder semi-transparente, Substrate, z.B. Schichtsilikate, feinteilige Metallteilchen, z. B. aus Zinn, Eisen oder Aluminium, Farbstoffe, z. B. Nirsorb von der Firma Milliken, Kupferhydroxidphosphate bzw. Kupferphosphate, z. B. Cu₃(PO₄)₂ * 2Cu(OH)₂ (CHP = Libethenit), basisches Kupferdiphosphat Cu3(P04)2 *Cu(OH)2, Kupferpyrophosphat Cu₂P₂O₇ * H₂O, 4CuO P₂O₅ * H₂O, 5CuO * P₂O₅ * 3H₂O, 6CuO * P₂O₅ * 3H₂O, 4CuO * P₂O₅ * 3H₂O, 4CuO * P₂O₅ * 1,2 H₂O, 4 CuO * P₂O₅, 4CuO * P₂O₅ * 1,5 H₂O. Es können auch Gemische der ge nannten Kupferhydroxidphosphate bzw. Kupferphosphate eingesetzt werden. Bei den Kupferphosphaten ist das Libethenit besonders bevorzugt.

Besonders bevorzugte Absorber sind ausgewählt aus der Gruppe Ruß, Antimon, Sb/Sn-Mischoxide, mit (Sn,Sb)O₂ beschichtete Glimmerplättchen, Magnetit, Molybdänsulfid, Molybdänoxid, BiOCl, Schichtsilikate und Farbstoffe.

Zum Teil sind diese mit den vorab beschriebenen bevorzugten zu reduzierenden Metallverbindungen identisch. In einem solchen Falle wirkt die zu reduzierende Metallverbindung gleichzeitig auch als Absorber. Es können auch Gemische aus einer Laserlicht absorbierenden Metallverbindung und einem anderen der vorab genannten Absorber eingesetzt werden. Bevorzugt werden jedoch davon verschiedene zu reduzierende Metallverbindungen, insbesondere dotiertes oder undotiertes TiO₂, aber auch B₂O₃, SnO₂, Bi₂O₃, Silberhalogenide, Zinksulfid oder Bismutvanadat, jeweils in partikulärer Form oder als Beschichtung auf einem Träger, beziehungsweise die diese Metallverbindungen umhüllenden Reduktionsmittel, mit einem oder mehreren der vorab beschriebenen Absorber versetzt.

Der Einbau von geeigneten Lichtabsorbern in das Laserpigment unterstützt dann die Reaktion auf den Laserbeschuss und führt zu einem stärkeren Farbumschlag. Hierzu sind bereits ganz geringe Zusatzmengen an Absorber ausreichend, welche auch die Farbe des Polymers nicht bzw. unwesentlich beeinflussen.

Die Konzentration des Absorbers bzw. eines Absorbergemisches ist abhängig von dem eingesetzten Reduktionsmittel. Der Anteil an zusätzlich eingesetztem Absorber im erfindungsgemäßen Laserpigment, falls vorhanden, beträgt in der Regel 0,0001 - 5 Gew.%, vorzugsweise 0,001 - 2 Gew.% und insbesondere 0,01 - 1 Gew.% bezogen auf die zu reduzierende Metallverbindung, insbesondere das Metalloxid oder Metalloxidgemisch.

Insbesondere für den Fall, dass das erfindungsgemäße Laserpigment eine zu reduzierende Metallverbindung aufweist, die von einem Reduktionsmittel umhüllt ist und in Form nanoteiliger Partikel bis 1000 nm Teilchengröße, insbesondere in Form der vorab beschriebenen trägerfreien Partikel mit einer Teilchengröße von 10 bis <100 nm, vorliegt, ist es auch von Vorteil, wenn die das erfindungsgemäße Pigment bildende Präparation zusätzlich als weitere Komponente ein oder mehrere Schutzkolloide enthält.

Letztere verhindern ein Zusammenklumpen dieser besonders feinteiligen Partikel aus der zu reduzierenden Metallverbindung, wenn diese mit dem Reduktionsmittel umhüllt werden. Da hier nicht jeweils ein einziger, sondern mehrere nanoteilige Partikel zusammen mit dem Reduktionsmittel umhüllt werden und auf diese Weise ein Cluster erzeugt wird, der das erfindungsgemäße Laserpigment darstellt, ist es Aufgabe der Schutzkolloide, die gleichmäßige Verteilung der nanoteiligen Partikel aus der zu reduzierenden Metallverbindung im Cluster zu gewährleisten. Die Cluster weisen dabei eine Teilchengröße von 0,01 bis 20 µm, vorzugsweise von 0,05 bis 10 µm, besonders bevorzugt 0,05 bis < 10 µm, auf. Auf diese Weise wird ein erfindungsgemäßes Laserpigment erhalten, welches über ein besonders geringes Deckvermögen verfügt, weil die im Pigment verteilten nanoteiligen Metallverbindungen eingestrahltes sichtbares Licht praktisch kaum streuen. Gleichzeitig ist ein solches Laserpigment aber im Anwendungsmedium gut dispergierbar. Ein derartiges Laserpigment kann daher auch zur Markierung nahezu transparenter Anwendungssysteme oder besonders dünner Beschichtungen verwendet werden.

Als Schutzkolloide kommen die dem Fachmann für solche Zwecke bekannten Verbindungsklassen, insbesondere wasserlösliche Polymere wie teilverseiftes Polyvinylacetat, Polyvinylalkohol, Polyvinylpyrrolidon, Zelluloseether (Tylose) wie zum Beispiel Methylzellulose, Hydroxyethylzellulose und Hydroxypropylmethylzellulose, Polyacrylate, Stärke, Proteine, Alginate, Pektine oder Gelatine in Betracht. Besonders bevorzugt sind Zelluloseether, insbesondere Hydroxyethylzellulose.

Die Schutzkolloide werden in geringen Mengen von 0,01 bis 5 %, vorzugsweise von 0,1 bis 2%, bezogen auf das Gewicht der Präparation, zugesetzt. Dabei kann die Größe der Cluster über die Menge der eingesetzten Schutzkolloide sowie gegebenenfalls noch zusätzlich vorhandener Tenside gezielt eingestellt werden. Grundsätzlich gilt dabei das Prinzip, dass eine größere Menge an Schutzkolloiden zu einer verringerten Größe der Cluster führt.
Das erfindungsgemäße Laserpigment wird, wenn es in der vorab beschriebenen Form von Clustern aus nanoteiligen zu reduzierenden Metallverbindungen mit einer Beschichtung aus einem Reduktionsmittel besteht, dem Anwendungsmedium, also dem zu lasermarkierenden Material, in einer Menge von etwa 0,1 bis 20 Gew.%, vorzugsweise von 0, 1 bis 5 Gew.%, und besonders bevorzugt von 0,5 bis 2 Gew.%, bezogen auf das Gewicht des zu lasermarkierenden Materials, zugesetzt.

In einer weiteren bevorzugten Ausführungsform wird das reduzierende Agens mit einer reduzierbaren Metallverbindung, insbesondere einem Metalloxid oder Metalloxidgemisch, wie z. B. Titandioxid, vollständig (umhüllt) oder teilweise beschichtet.

Wird beispielsweise feinteiliges, oxidierbares Material, welches sowohl organischen, anorganischen, metallischen oder auch metallorganischen Ursprungs sein kann, wie z.B. Ruß, Kunststoffpulver, usw.mit einer reduzierbaren Metallverbindung, beispielsweise einem Metalloxid, umhüllt, reagiert das Produkt dieser Umhüllung unter Laserbeschuss ebenso wie umhülltes Metalloxid zu Suboxiden oder Metallen. Im Falle von Titandioxid als Partner ist das Reaktionsprodukt eines Laserbeschusses ein blauschwarzes Suboxid, welches eine sehr kontrastreiche Lasermarkierung erlaubt.

In einer bevorzugten Ausführungsform wird in Wasser dispergierter Ruß - analog zu den bei Perlglanzpigmenten bekannten Verfahren - mit TiO₂ beschichtet. Vorteilhafterweise erfolgt das Glühen des so erhaltenen Pigments zur Umwandlung des Hydroxids zum Oxid unter Ausschluss von Sauerstoff, damit der eingeschlossene Ruß nicht verbrennt. Dies kann man relativ einfach durch Fluten des Ofens mit Stickstoff erreichen. In diesem Beispiel wirkt der Ruß sowohl als Absorber wie auch als reduzierendes Agens. Sollte das reduzierende Agens keine Absorption des Lasers besitzen, wie beispielsweise mikrofeine Kunststoffteilchen, empfiehlt sich der Zusatz bzw. Einbau eines Absorbers, wie oben angegeben.

Wird ein feinteilig partikulär vorliegendes Reduktionsmittel, wie vorab beschrieben, mit einer zu reduzierenden Metallverbindung beschichtet, weist das Reduktionsmittel vorteilhafterweise eine Teilchengröße von 0,01 bis 50 µm, insbesondere von 0,1 bis 20 µm auf.

Die erfindungsgemäßen Laserpigmente besitzen Teilchengrößen von 0,01 - 200 µm, vorzugsweise 0,01 - 100 µm, insbesondere 0,1 - 20 µm, damit sie universell für die Lasermarkierung von organischen Polymeren und anorganischen Systemen eingesetzt werden können. Dabei sind die geringeren Partikelgrößen in vorteilhafter Weise in dünnen Schichten und Beschichtungen einsetzbar, während größere Partikel auch in Kunststoffmassen eingesetzt werden können.

Zur Einstellung der jeweils benötigten Teilchengröße können die erfindungsgemäßen Laserpigmente bei Bedarf einer Mahlung unterzogen werden.

Als Teilchengröße im Sinne der vorliegenden Erfindung wird die Länge der größten Achse der Pigmente angesehen. Die Bestimmung der Teilchengröße kann im Prinzip mit jeder dem Fachmann zur Teilchengrößenbestimmung vertrauten Methode erfolgen. Auf einfache Art und Weise kann die Teilchengrößenbestimmung, je nach Größe der Laserpigmente, beispielsweise durch direkte Betrachtung und Vermessung einer Anzahl von Einzelpartikeln in hochauflösenden Lichtmikroskopen, besser jedoch in Elektronenmikroskopen, wie dem Rasterelektronenmikroskop (REM) oder dem hochauflösenden Elektronenmikroskop (HRTEM), aber auch im Rasterkraftmikroskop (AFM), letztere jeweils mit entsprechender Bildauswertungssoftware, erfolgen. Vorteilhafterweise kann die Bestimmung der Teilchengröße auch mit Messgeräten (z.B. Malvern Mastersizer 2000, APA200, Malvern Instruments Ltd., UK) erfolgen, die nach dem Prinzip der Laserbeugung arbeiten. Mit diesen Messgeräten lässt sich im Standardverfahren (SOP) aus einer Pigmentsuspension sowohl die Partikelgröße als auch die Partikelgrößenverteilung im Volumen feststellen. Gemäß der vorliegenden Erfindung ist die letztgenannte Messmethode bevorzugt.

Analog zur Bestimmung der Teilchengröße der erfindungsgemäßen Laserpigmente kann auch die Bestimmung der Teilchengröße der zu reduzierenden Metallverbindung oder des Reduktionsmittels erfolgen, falls diese, wie vorab beschrieben, partikulär vorliegen.

Die erfindungsgemäßen Laserpigmente können verschiedene Formen aufweisen. In Abhängigkeit davon, ob eine partikuläre zu reduzierende Metallverbindung oder eine zu reduzierende Metallverbindung auf einem Träger mit einem Reduktionsmittel beschichtet wird, oder ob ein partikuläres Reduktionsmittel mit einer zu reduzierenden Metallverbindung beschichtet wird, und in Abhängigkeit von der ursprünglichen Formgebung der jeweils zu beschichtenden Verbindung liegen die erfindungsgemäßen Laserpigmente in der Regel in Kugelform, Eiform, Linsenform, Wurstform, etc vor. Es ist dabei im Hinblick auf das Herstellverfahren selbstverständlich, dass diese Formen nicht regelmäßig sein müssen, sondern auch deformiert vorliegen können.

Besonders bevorzugte intrinsisch markierbare Laserpigmente gemäß der vorliegenden Erfindung werden nachfolgend genannt:

| Metallverbindung | Reduktionsmittel | Absorber |
|---|---|---|
| Titandioxid (Pigment ohne Träger) | Melaminharz | Ruß, Magnetit, (Sn, Sb)O₂ |
| Titandioxid auf Träger (mit TiO₂ beschichtetes Glimmerplättchen) | Melaminharz | Ruß, Magnetit, (Sn, Sb)O₂ |
| Titandioxid auf Träger (mit TiO₂ beschichtetes Glasplättchen) | Melaminharz | Ruß, Magnetit, (Sn, Sb)O₂ |
| Titandioxid (Pigment ohne Träger | Harnstoff-Formaldehyd-Harz | Ruß, Magnetit, (Sn, Sb)O₂ |
| Titandioxid auf Träger (mit TiO₂ beschichtetes Glimmerplättchen) | Harnstoff-Formaldehyd-Harz | Ruß, Magnetit, (Sn, Sb)O₂ |
| Titandioxid auf Träger (mit TiO₂ beschichtetes Glasplättchen) | Harnstoff-Formaldehyd-Harz | Ruß, Magnetit, (Sn, Sb)O₂ |
| Titandioxid (Pigment ohne Träger | Melamin-Formaldehyd-Harz | Ruß, Magnetit, (Sn, Sb)O₂ |
| Titandioxid auf Träger (mit TiO₂ beschichtetes Glimmerplättchen) | Melamin-Formaldehyd-Harz | Ruß, Magnetit, (Sn, Sb)O₂ |
| Titandioxid auf Träger (mit TiO₂ beschichtetes Glasplättchen) | Melamin-Formaldehyd-Harz | Ruß, Magnetit, (Sn, Sb)O₂ |
| Titandioxid (als Beschichtung) | Ruß-Partikel | Ruß, Magnetit, (Sn, Sb)O₂ |
| Sb/Sn-Mischoxid-Pigment | | Melamin-Formaldehyd-Harz |
| Sb/Sn-Mischoxid auf Träger Glimmerplättchen | | Melamin-Formaldehyd-Harz |

Gegenstand der vorliegenden Erfindung ist auch ein Verfahren zur Herstellung des vorab beschriebenen erfindungsgemäßen intrinsisch lasermarkierbaren Pigmentes gemäß Anspruch 14, wobei eine oder mehrere reduzierbare Metallverbindungen mit einem Reduktionsmittel teilweise oder vollständig beschichtet, oder ein Reduktionsmittel mit einer oder mehreren reduzierbaren Metallverbindungen teilweise oder vollständig beschichtet werden.

Die reduzierbare Metallverbindung kann dabei in Form trägerfreier Partikel oder als Beschichtung auf einem Träger vorliegen. Wird ein Reduktions-mittel mit einer zu reduzierenden Metallverbindung beschichtet, liegt auch das Reduktionsmittel in feinteiliger Form partikulär vor.

Die Einzelheiten des Verfahrens sind vorab bereits hinsichtlich des Aufbaus des erfindungsgemäßen Pigmentes, insbesondere am Beispiel von Titandioxid als zu reduzierender Metallverbindung beschrieben worden. Auf die dortigen Ausführungen wird insofern Bezug genommen.

Gegenstand der vorliegenden Erfindung ist auch die Verwendung des vorab beschriebenen erfindungsgemäßen Pigmentes zur Lasermarkierung von anorganischen Systemen und von organischen Polymeren. Details hierzu sind ebenfalls weiter oben bereits erläutert worden.

Insbesondere ist auch ein organisches Polymersystem beziehungsweise ein anorganisches System, weiches das erfindungsgemäße intrinsisch lasermarkierbare Pigment enthält, Gegenstand der vorliegenden Erfindung.

Durch den Zusatz der erfindungsgemäßen Laserpigmente als Additive, insbesondere in Konzentrationen von 0,1 bis 30 Gew.%, vorzugsweise 0,5 bis 20 Gew.%, und ganz besonders bevorzugt von 1 bis 10 Ges.%, bezogen auf das zu markierende, vorzugsweise organische, Polymer bzw. Polymersystem, wird bei der Lasermarkierung von Polymeren ein deutlich höherer Kontrast erreicht als mit den kommerziell erhältlichen Absorbern bei vergleichbaren Konzentrationen. Die genannten Konzentrationen sind nicht alleine abhängig vom erwünschten Kontrast, sondern auch von der Schichtdicke des Einsatzmediums. So sind in Druck- und Lackanwendungen deutlich höhere Konzentrationen erforderlich als in Kunststoffen um dem Laserstrahl eine genügende Anzahl an Pigmentteilchen zur Verfügung zu stellen.

Die Konzentration des erfindungsgemäßen Laserpigmentes in Polymeren, bzw. in Polymersystemen, vorzugsweise in Thermoplasten, Duroplasten oder Elastomeren, ist allerdings auch noch abhängig von dem eingesetzten Polymermaterial. Der geringe Anteil an Laserpigment verändert das Polymersystem unwesentlich und beeinflusst nicht dessen Verarbeitbarkeit. Ferner können den Polymeren Farbmittel zugesetzt werden, die farbliche Variationen jeder Art zulassen und gleichzeitig eine Beibehaltung der Lasermarkierung gewährleisten. Geeignete Farbmittel sind insbesondere farbige Metalloxidpigmente sowie organische Pigmente und Farbstoffe, die sich bei der Lasermarkierung nicht zersetzen bzw. unter Laserlicht nicht reagieren.

Als polymere Materialien für die Lasermarkierung sind insbesondere alle bekannten Kunststoffe, insbesondere Thermoplasten, ferner Duroplasten und Elastomere, geeignet, wie sie z.B. im Ullmann, Bd. 15, S. 457 ff., Verlag VCH beschrieben werden. Geeignete Polymere sind z.B. Polyethylen, Polypropylen, Polyamide, Polyester, Polyesterester, Polyetherester, Polyphenylenether, Polyacetal, Polyurethan, Polybutylenterephthalat (PBT), Polymethylmethacrylat, Polyvinylacetal, Polystyrol, AcrylnitrilButadien-Styrol (ABS), Acrylnitril-Styrol-Acrylester (ASA), Polycarbonat, Polyethersulfone und Polyetherketone sowie deren Copolymeren, Mischungen, und/oder Polymerblends, wie z.B. PC/ABS, MABS.

Die Einarbeitung des erfindurigsgemäßen Laserpigments in das zu markierende Polymer, vorzugsweise einen Kunststoff oder eine Kunststofffolie oder eine Beschichtung, z. B. einen Lack-, eine Papier- oder Pulverlackbeschichtung, einen Automobillack oder eine Druckfarbe, erfolgt, indem das Polymergranulat, der Lack oder die Druckfarbe mit dem Laserpigment gemischt wird und ggf. unter Wärmeeinwirkung verformt wird. Die Zugabe des Laserpigments zu dem Polymeren kann gleichzeitig oder nacheinander erfolgen. Dem Polymeren, vorzugsweise einem Kunststoffgranulat, können bei der Einarbeitung des Laserpigmentes gegebenenfalls Haftmittel, organische polymerverträgliche Lösemittel, Stabilisatoren und/oder unter den Arbeitsbedingungen temperaturstabile Tenside zugesetzt werden.

Die Herstellung eines mit dem Laserpigment dotierten Kunststoffgranulats erfolgt in der Regel so, dass in einem geeigneten Mischer das Kunststoffgranulat vorgelegt, mit eventuellen Zusätzen benetzt und danach das Laserpigment zugesetzt und untergemischt wird. Die Pigmentierung des Polymeren erfolgt in der Regel über ein Farbkonzentrat (Masterbatch) oder Compound. Die so erhaltene Mischung kann dann direkt in einem Extruder oder einer Spritzgieß-maschine verarbeitet werden. Die bei der Verarbeitung gebildeten Formkörper zeigen eine sehr homogene Verteilung des Laserpigments. Anschließend findet die Lasermarkierung mit einem geeigneten Laser statt.

Gegenstand der Erfindung ist auch ein Verfahren zur Herstellung eines mit dem erfindungsgemäßen Pigment dotierten Polymeren, wobei ein polymeres Material mit dem erfindungsgemäßen Laserpigment gemischt und das Pigment mittels eines Extruders in das Polymer oder die Polymermatrix eingearbeitet wird. Gegebenenfalls wird dann die so erhaltene Polymermasse unter Wärmeeinwirkung verformt..

Die Beschriftung mit dem Laser erfolgt derart, dass der Probenkörper in den Strahlengang eines gepulsten Lasers, vorzugsweise eines Nd:YAG-Lasers gebracht wird. Ferner ist eine Beschriftung mit einem ExcimerLaser, z.B. über eine Maskentechnik, möglich. Jedoch sind auch mit anderen herkömmlichen Lasertypen, die eine Wellenlänge in einem Bereich hoher Absorption des verwendeten Pigments aufweisen, die gewünschten Ergebnisse zu erzielen. Die erhaltene Markierung wird durch die Bestrahlungszeit (bzw. Pulszahl bei Pulslasern) und Bestrahlungsleistung des Lasers sowie des verwendeten Kunststoffsystems bestimmt. Die Leistung der verwendeten Laser hängt von der jeweiligen Anwendung ab und kann im Einzelfall vom Fachmann ohne weiteres ermittelt werden.

Der verwendete Laser hat im allgemeinen eine Wellenlänge im Bereich von 157 nm bis 10,6 µm, vorzugsweise im Bereich von 532 nm bis 10,6 µm. Beispielsweise seien hier CO₂-Laser (10,6 µm) und Nd:YAG-Laser (1064 bzw. 532 nm) oder gepulste UV-Laser erwähnt. Die Excimerlaser weisen folgende Wellenlängen auf: F₂-Excimerlaser (157 nm), ArF-Excimerlaser (193 nm), KrCl-Excimerlaser (222 nm), KrF-Excimerlaser (248 nm), XeCl-Excimerlaser (308 nm), XeF-Excimerlaser (351 nm), frequenzvervielfachte Nd:YAG-Laser mit Wellenlängen von 355 nm (frequenzverdreifacht) oder 265 nm (frequenzvervierfacht). Besonders bevorzugt werden Nd:YAG-Laser (1064 bzw. 532 nm) und CO₂-Laser eingesetzt. Die Energiedichten der eingesetzten Laser liegen im allgemeinen im Bereich von 0,3 mJ/cm² bis 50 J/cm², vorzugsweise 0,3 mJ/cm² bis 10 J/cm². Bei der Verwendung von gepulsten Lasern liegt die Pulsfrequenz im allgemeinen im Bereich von 1 bis 60 kHz. Entsprechende Laser, die im erfindungsgemäßen Verfahren eingesetzt werden können, sind kommerziell erhältlich.

Die Verwendung des mit dem erfindungsgemäßen Laserpigment dotierten Polymeren kann auf allen Gebieten erfolgen, wo bisher übliche Druckverfahren zur Beschriftung von Kunststoffen, Kunststofffolien, eingesetzt werden. Beispielsweise können Formmassen, Halbzeuge und Fertigteile aus dem erfindungsgemäßen Polymeren in der Elektro-, Elektronik- und Kraftfahrzeugindustrie Anwendung finden. Die Kennzeichnung und Beschriftung von z.B. Kabeln, Leitungen, Zierleisten bzw. Funktionsteilen im Heizungs-, Lüftungs- und Kühlbereich oder Schalter, Stecker, Hebel und Griffe, die aus dem erfindungsgemäß dotierten Polymeren bestehen, können selbst an schwer zugänglichen Stelten mit Hilfe von Laserlicht markiert werden. Weiterhin kann das erfindungsgemäße Polymersystem bei Verpackungen im Lebensmittelbereich oder im Spielzeugbereich eingesetzt werden. Die Markierungen auf den Verpackungen zeichnen sich dadurch aus, dass sie wisch- und kratzfest, stabil bei nachträglichen Sterilisationsprozessen, und hygienisch rein beim Markierungsprozess aufbringbar sind. Weiterhin können Kunststoffkorken z.B. für Weinflaschen, beschriftet werden.

Komplette Etikettenbilder können dauerhaft auf die Verpackung für ein Mehrwegsystem aufgebracht werden. Weiterhin findet das erfindungsgemäße Polymersystem Anwendung in der Medizintechnik, beispielsweise bei der Markierung von Petrischalen, Microtiterplatten, Einmalspritzen, Ampullen, Probenbehälter, Versorgungsschläuche und medizinische Auffangbeutel bzw. Vorratsbeutel.

Ein weiteres wichtiges Anwendungsgebiet für die Laserbeschriftung sind Kunststoffmarken zur individuellen Kennzeichnung von Tieren, sogenannte Cattle Tags oder Ohrmarken. Über ein Barcodesystem werden die Informationen gespeichert, welche spezifisch dem Tier zugehörig sind. Diese können bei Bedarf wieder mit Hilfe eines Scanners abgerufen werden. Die Beschriftung muss sehr dauerhaft werden, da die Marke teilweise über mehrere Jahre an den Tieren verbleiben.

Die Lasermarkierung von Formmassen, Halbzeugen und Fertigteilen, die aus mit dem erfindungsgemäßen Laserpigment dotierten Polymeren bestehen, ist somit möglich.

Die folgenden Beispiele sollen die Erfindung erläutern ohne sie jedoch zu begrenzen. Die angegebenen Prozentangaben sind Gewichtsprozent.

### Beispiele

### Mit Reduktionsmittel umhülltes Metalloxid

### Beispiel 1:

100 g Rutil-Titandioxidpigment im Teilchengrößenbereich von 100 - 500 nm (RN 2900 der Fa. Kronos) werden in 150 g Wasser angeteigt. 25 g Melaminharz (Maduritpulver der Fa. Ineos) und 0,1 g einer wässrigen Rußdispersion mit einem Rußgehalt von 25 % (Derussol N25/L von der Fa. Evonik) werden in diese Titandioxidsuspension eingerührt und der gesamte Ansatz in einer Perlmühle (Perlmühlenaufsatz für Dissolver "Dispermat" der Fa. Getzmann) dispergiert. Der fertig dispergierte Ansatz wird anschließend auf 70 °C erwärmt und mit etwa 30 ml einer 25%igen Lösung von p-Toluolsulfonsäure auf pH = 4 eingestellt. Nach einer Reaktionszeit von 30 min lässt man den Ansatz abkühlen, und danach wird über eine Nutsche filtriert. Die Trocknung erfolgt über Nacht bei 180 °C.

Das so erhaltene Material weist eine mit einem Mastersizer 2000 der Firma Malvern Instruments Ltd. unter Standardbedingungen ermittelte Teilchengröße von D₉₅=20 µm auf und wird mittels Extruder 1 %ig in Polypropylen eingearbeitet. Dieses Compound wird dann auf einer Spritzgussmaschine zu Testplatten der Größe 9 cm x 6 cm x 0,15 cm geformt. Auf diese Platten werden mit einem Nd:YAG Laser Testraster markiert, mit welchem eine große Bandbreite an verschiedenen Lasereinstellungen hinsichtlich Energie des Lasers, Geschwindigkeit des Laserstrahls und Frequenz der Laserpulse dargestellt werden können.

### Folgende Lasereinstellungen werden getestet:

Diodengepumpter 12 W Nd:YAG Laser der Firma Trumpf.
Das Testraster besteht aus gefüllten Quadraten mit Kantenlängen von 4 und 2 mm. Die Energie wird variiert von 30 % bis 100 % der Maximalleistung in Schritten von jeweils 10 %. Die Schreibgeschwindigkeit wird variiert zwischen 200 mm/s und 2000 mm/s und die Frequenz zwischen 1 KHz und 60 KHz.

Das Additiv aus Beispiel 1 zeigt dabei über das gesamte Spektrum unterschiedlicher Laserparameter eine gleichmäßige schwarze Markierung von ausgezeichnetem Kontrast.

### Beispiel 2:

80 g einer wässrigen Harnstoff-Formaldehydharz-Lösung (Kaurit 210 flüssig von der Fa. BASF) mit einem Gehalt von 50 % Harz werden mit 100 g Wasser verdünnt. In diese Lösung werden 0,02 g Flammruß FW 1 von der Fa. Evonik eingerührt. In einem Dissölver werden 100 g eines Anatas-Titandioxidpigments der Teilchengröße 100 - 500 nm

(Kronos 1171) eingerührt und danach bei erhöhter Drehzahl (von 2500 U/min =ca. 8 m/s Umfangsgeschwindigkeit bei einem Durchmesser von 60 mm der Dissolverscheibe) dispergiert. Der fertig dispergierte Ansatz wird anschließend auf 70 °C erwärmt und mit etwa 4 ml einer 25 %igen Zitronensäürelösung auf pH = 4 eingestellt. Nach einer Reaktionszeit von 30 min lässt man den Ansatz abkühlen und danach wird über eine Nutsche filtriert. Die Trocknung erfolgt über Nacht bei 180 °C.

Das so erhaltene Material weist eine analog zu Beispiel 1 bestimmte Teilchengröße von D₉₅=30 µm auf wird in eine 10 %ige wässrige Lösung von Polyvinylalkohol eingerührt. Mit einer Rakel wird daraus eine Folie gezogen, die nach dem Trocknen eine Schichtdicke von 50 µm besitzt. Diese Folie wird mit einem Nd:YAG Laser analog Beispiel 1 mit dem Testraster markiert. Das Ergebnis zeigt ebenfalls eine kontrastreiche, schwarze Markierung mit nahezu konstanter Schwärzung über einen weiten Bereich der verschiedenen Laserparameter.

### Beispiel 3:

20 g Silbernitrat (AgNO₃) werden in 100g Wasser gelöst. In diese Lösung werden 50g Kaolin mit einer Teilchengröße D₉₅=30 µm eingerührt und durch Zutropfen von 80 g 10 %iger NaCl-Lösung unter Rühren das Silber als Silberchlorid (AgCl) auf das Kaolin aufgeällt. Vor der Zugabe von 30 g Madurit MW 116 (75 %ige Melamin-Formaldehyd-Harz Lösung von Firma Ineos) wird die Suspension mit NaOH auf pH 8 eingestellt. Danach wird der gesamte Ansatz auf 70 °C erwärmt und nach dem Erreichen der Temperatur durch langsames Zutropfen von 1 molarer HCl auf pH 3-4 angesäuert. Nach einer Reaktionszeit von etwa 30 min wird das Ganze abkühlen gelassen und über eine Nutsche abfiltriert. Die Trocknung erfolgt über Nacht bei 180 °C.

Das so erhaltene Material weist eine analog zu Beispiel 1 bestimmte Teilchengröße von D₉₅=100 µm auf und wird mittels Extruder 0,5 %ig in Polypropylen eingearbeitet. Dieses Compound wird dann auf einer Spritzgussmaschine zu Testplatten der Größe 9,0 cm x 6,0 cm x 0,15 cm geformt. Auf diese Platten wird mit einem CO₂ - Laser bei einer Wellenlänge von 10,6 µm und den Variationen bezüglich der Laserleistung und Lasergeschwindigkeit analog Beispiel 1 das Testraster markiert.. Durch den Laserbeschuss reduziert sich das Silberchlorid zu feinverteiltem elementaren Silber und die Markierung zeigt ein kontrastreiches Schwarz über nahezu die gesamte Bandbreite der Laserparameter.

### Mit Metalloxid umhülltes Reduktionsmittel

### Beispiel 4:

0,2 g einer wässrigen Rußdispersion mit einer Primärpartikelgröße von 25 nm (Derussol A von Evonik) werden in 1,5 Liter Wasser verdünnt und mit HCl auf pH 2,2 eingestellt. Diese Suspension wird unter Rühren auf 75 °C erwärmt. Anschließend werden 400 g TiCl₄-Lösung zugetropft, wobei mit NaOH der pH auf 2,2 konstant gehalten wird. Nach dem Abkühlen wird der Ansatz abgesaugt und bei 180 °C bis zur Gewichtskonstanz getrocknet. Nach dem Trocknen wird das Material unter Stickstoff bei 600 °C geglüht.

Das so erhaltene Pigment weist eine analog zu Beispiel 1 bestimmte Teilchengröße von D₉₅=10 µm auf und wird mittels Extruder in Polypropylen eingearbeitet. Dieses Compound wird dann auf einer Spritzgussmaschine zu Testplatten der Größe 9 cm x 6 cm x 0,15 cm geformt. Auf diese Platten werden mit einem Nd:YAG Laser Testraster analog zu Beispiel 1 markiert, mit welchem eine große Bandbreite an verschiedenen Lasereinstellungen hinsichtlich Energie des Lasers, Geschwindigkeit des Laserstrahls und Frequenz der Laserpulse dargestellt werden können.

Man erhält eine kontrastreiche dunkle Markierung bei nahezu allen im Testraster enthaltenen Lasereinstellungen.

### Beispiel 5:

50 g einer wässrigen Harnstoff-Formaldehydharz-Lösung (Kaurit 210 flüssig von der Fa. BASF) mit einem Gehalt von 50 % Harz werden mit 5 g Ruß (1%ige, wässrige Rußdispersion, hergestellt aus Derusol N25/L der der Fa. Evonik), 50 g eines nanoteiligen Titandioxidpigmentes (P25 der Fa. Evonik, mittlere Primärpartikelgröße 21 nm) und 50 g einer 0,4%igen Lösung von Tylose H2O vermischt und in einem Dissolver dispergiert. Der fertig dispergierte Ansatz wird anschließend auf 70 °C erwärmt, mit weiteren 100g einer 0,4%igen Tyloselösung vermischt und mit etwa 4 ml einer 10 %igen Oxalsäurelösung auf pH 3 bis 4 eingestellt. Nach einer Reaktionszeit von etwa 30 min lässt man den Ansatz abkühlen und danach wird über eine Nutsche filtriert. Vorzugsweise wird der Filterkuchen mit VEwasser gewaschen. Die Trocknung erfolgt über Nacht bei 180 °C.

Das so erhaltene hellgraue Pulver weist eine analog zu Beispiel 1 bestimmte Teilchengröße von D₉₅=1 µm auf und wird in eine 10 %ige wässrige Lösung von Polyvinylalkohol eingerührt, so dass eine 1,5% ige Dispersion erhalten wird. Mit einer Rakel wird daraus eine Folie gezogen, die nach dem Trocknen eine Schichtdicke von 50 µm besitzt. Diese Folie, die neben dem erfindungsgemäßen Laserpigment keine weiteren Pigmente oder Farbstoffe enthält, zeigt nur eine leichte Trübung. Sie wird mit einem Nd:YAG Laser analog Beispiel 1 mit dem Testraster markiert. Das Ergebnis zeigt ebenfalls eine kontrastreiche, schwarze Markierung mit nahezu konstanter Schwärzung über einen weiten Bereich der verschiedenen Laserparameter.

## Patentansprüche

1. Intrinsisch lasermarkierbares Pigment, **dadurch gekennzeichnet, dass** das Pigment als Präparation vorliegt, enthaltend eine oder mehrere reduzierbare Metallverbindungen, ausgewählt aus der Gruppe TiO₂ (Rutil oder Anatas), B₂O₃, Fe₂O₃, SnO₂, Bi₂O₃, Silberhalogenide, Zinksulfid, SnO/SbO, (Sn,Sb)O₂ oder Bismutvanadat, und ein Reduktionsmittel, und eine Teilchengröße von 0,01 - 200 µm aufweist, wobei das Reduktionsmittel ausgewählt ist aus der Gruppe Melaminharz, Harnstoffharz, Harnstoff-Formaldehyd-Harz, Harnstoff/Melaminharz-Gemische und Kohlenstoff, der Anteil an Reduktionsmittel, bezogen auf das Gesamtpigment, 10-50 Gew. % beträgt und die reduzierbare Metallverbindung mit dem Reduktionsmittel direkten und innigen Kontakt hat.

2. Pigment nach Anspruch 1, **dadurch gekennzeichnet, dass** die reduzierbare Metallverbindung als trägerfreier Partikel vorliegt.

3. Pigment nach Anspruch 1, **dadurch gekennzeichnet, dass** die reduzierbare Metallverbindung als Beschichtung auf einem Träger vorliegt.

4. Pigment nach einem oder mehreren der Ansprüche 1 bis 3, **dadurch gekennzeichnet, dass** die reduzierbare Metallverbindung mit einem Reduktionsmittel teilweise oder vollständig beschichtet ist.

5. Pigment nach einem oder mehreren der Ansprüche 1 bis 3, **dadurch gekennzeichnet, dass** das Reduktionsmittel mit einer reduzierbaren Metallverbindung teilweise oder vollständig beschichtet ist.

6. Pigment nach Anspruch 1, **dadurch gekennzeichnet, dass** das TiO₂ ein dotiertes oder undotiertes Titandioxid ist.

7. Pigment nach einem oder mehreren der Ansprüche 3 bis 6, **dadurch gekennzeichnet, dass** der Träger ausgewählt ist aus der Gruppe der Glimmerplättchen, Siliziumdioxidplättchen, Glasplättchen, Keramikplättchen, Aluminiumoxidplättchen, Eisenoxidplättchen oder Graphitplättchen.

8. Pigment nach Anspruch 7, **dadurch gekennzeichnet, dass** der Träger ein Glimmerplättchen oder Glasplättchen ist.

9. Pigment nach einem oder mehreren der Ansprüche 1 bis 8, **dadurch gekennzeichnet, dass** das Pigment zusätzlich als weitere Komponente einen oder mehrere Absorber enthält.

10. Pigment nach Anspruch 9, **dadurch gekennzeichnet, dass** der Absorber ausgewählt ist aus der Gruppe Ruß, Antimon, Sb/Sn-Mischoxide, mit (Sn,Sb)O₂ beschichtete Glimmerplättchen, Kupferhydroxidphosphat, Kupferphosphat, Magnetit, Molybdänsulfid, Molybdänoxid, BiOCl, Schichtsilikate, Farbstoffe.

11. Pigment nach einem oder mehreren der Ansprüche 1 bis 10, **dadurch gekennzeichnet, dass** das Pigment zusätzlich als weitere Komponente ein oder mehrere Schutzkolloide enthält.

12. Pigment nach einem oder mehreren der Ansprüche 2, 4 bis 6 und 9 bis 11, **dadurch gekennzeichnet, dass** der trägerfreie Partikel eine Teilchengröße im Bereich von 1 nm bis 1000 nm aufweist.

13. Pigment nach Anspruch 12, **dadurch gekennzeichnet, dass** die Teilchengröße im Bereich von 10 nm bis <100 nm liegt.

14. Verfahren zur Herstellung eines Pigments nach einem oder mehreren der Ansprüche 1 bis 13, **dadurch gekennzeichnet, dass** man eine oder mehrere reduzierbare Metallverbindungen mit einem Reduktionsmittel teilweise oder vollständig beschichtet oder ein Reduktionsmittel mit einer oder mehreren reduzierbaren Metallverbindungen teilweise oder vollständig beschichtet, wobei die reduzierbare Metallverbindung ausgewählt ist aus der Gruppe TiO₂ (Rutil oder Anatas), B₂O₃, Fe₂O₃, SnO₂, Bi₂O₃, Silberhalogenide, Zinksulfid, SnO/SbO, (Sn,Sb)O₂ oder Bismutvanadat, und das Reduktionsmittel ausgewählt ist aus der Gruppe Melaminharz, Harnstoffharz, Harnstoff-Formaldehyd-Harz, Harnstoff/Melaminharz-Gemische und Kohlenstoff, und wobei der Anteil an Reduktionsmittel, bezogen auf das Gesamtpigment, 10-50 Gew. % beträgt.

15. Verfahren nach Anspruch 14, **dadurch gekennzeichnet, dass** die reduzierbare Metallverbindung als trägerfreier Partikel oder als Beschichtung auf einem Träger vorliegt und mit einem Reduktionsmittel teilweise oder vollständig beschichtet wird.

16. Verwendung des Pigments nach einem oder mehreren der Ansprüche 1 bis 13 zur Lasermarkierung von anorganischen Systemen und von organischen Polymeren.

17. Organisches Polymer enthaltend ein intrinsisch lasermarkierbares Pigment nach einem oder mehreren der Ansprüche 1 bis 13.

18. Polymer nach Anspruch 17, **dadurch gekennzeichnet, dass** der Anteil an Pigment nach einem oder mehreren der Ansprüche 1 bis 13 im Polymer 0,1 - 30 Gew. %, bezogen auf das Polymer, beträgt.

19. Polymer nach Anspruch 17 oder 18, **dadurch gekennzeichnet, dass** das Polymer ein Kunststoff, eine Kunststofffolie, ein Lack, ein Automobillack, ein Pulverlack, eine Druckfarbe oder eine Papierbeschichtung ist.

20. Verfahren zur Herstellung des lasermarkierbaren Polymers nach einem oder mehreren der Ansprüche 17 bis 19, **dadurch gekennzeichnet, dass** man das Pigment nach einem oder mehreren der Ansprüche 1 bis 13 mit einem Extruder in das Polymer oder die Polymermatrix einarbeitet.

## Claims

1. Intrinsically laser-markable pigment, **characterised in that** the pigment is in the form of a preparation comprising one or more reducible metal compounds selected from the group TiO₂ (rutile or anatase), B₂O₃, Fe₂O₃, SnO₂, Bi₂O₃, silver halides, zinc sulfide, SnO/SbO, (Sn,Sb)O₂ or bismuth vanadate, and a reducing agent, and has a particle size of 0.01 - 200 µm, where the reducing agent is selected from the group melamine resin, urea resin, urea-formaldehyde resin, urea/melamine resin mixtures and carbon, the proportion of reducing agent, based on the entire pigment, is 10-50% by weight and the reducible metal compound is in direct and intimate contact with the reducing agent.

2. Pigment according to Claim 1, **characterised in that** the reducible metal compound is in the form of a support-free particle.

3. Pigment according to Claim 1, **characterised in that** the reducible metal compound is in the form of a coating on a support.

4. Pigment according to one or more of Claims 1 to 3, **characterised in that** the reducible metal compound is partly or fully coated with a reducing agent.

5. Pigment according to one or more of Claims 1 to 3, **characterised in that** the reducing agent is partly or fully coated with a reducible metal compound.

6. Pigment according to Claim 1, **characterised in that** the TiO₂ is a doped or undoped titanium dioxide.

7. Pigment according to one or more of Claims 3 to 6, **characterised in that** the support is selected from the group of mica flakes, silicon dioxide flakes, glass flakes, ceramic flakes, aluminium oxide flakes, iron oxide flakes or graphite flakes.

8. Pigment according to Claim 7, **characterised in that** the support is a mica flake or glass flake.

9. Pigment according to one or more of Claims 1 to 8, **characterised in that** the pigment additionally comprises one or more absorbers as further component.

10. Pigment according to Claim 9, **characterised in that** the absorber is selected from the group carbon black, antimony, Sb/Sn mixed oxides, (Sn,Sb)O₂-coated mica flakes, copper hydroxide phosphate, copper phosphate, magnetite, molybdenum sulfide, molybdenum oxide, BiOCl, phyllosilicates, dyes.

11. Pigment according to one or more of Claims 1 to 10, **characterised in that** the pigment additionally comprises one or more protective colloids as further component.

12. Pigment according to one or more of Claims 2, 4 to 6 and 9 to 11, **characterised in that** the support-free particle has a particle size in the range from 1 nm to 1000 nm.

13. Pigment according to Claim 12, **characterised in that** the particle size is in the range from 10 nm to < 100 nm.

14. Process for the preparation of a pigment according to one or more of Claims 1 to 13, **characterised in that** one or more reducible metal compounds are partly or fully coated with a reducing agent or a reducing agent is partly or fully coated with one or more reducible metal compounds, where the reducible metal compound is selected from the group TiO₂ (rutile or anatase), B₂O₃, Fe₂O₃, SnO₂, Bi₂O₃, silver halides, zinc sulfide, SnO/SbO, (Sn,Sb)O₂ or bismuth vanadate, and the reducing agent is selected from the group melamine resin, urea resin, urea-formaldehyde resin, urea/melamine resin mixtures and carbon, and where the proportion of reducing agent, based on the entire pigment, is 10-50% by weight.

15. Process according to Claim 14, **characterised in that** the reducible metal compound is in the form of a support-free particle or in the form of a coating on a support and is partly or fully coated with a reducing agent.

16. Use of the pigment according to one or more of Claims 1 to 13 for the laser marking of inorganic systems and of organic polymers.

17. Organic polymer comprising an intrinsically laser-markable pigment according to one or more of Claims 1 to 13.

18. Polymer according to Claim 17, **characterised in that** the proportion of pigment according to one or more of Claims 1 to 13 in the polymer is 0.1 - 30% by weight, based on the polymer.

19. Polymer according to Claim 17 or 18, **characterised in that** the polymer is a plastic, a plastic film, a surface coating, an automobile paint, a powder coating, a printing ink or a paper coating.

20. Process for the preparation of the laser-markable polymer according to one or more of Claims 17 to 19, **characterised in that** the pigment according to one or more of Claims 1 to 13 is incorporated into the polymer or polymer matrix using an extruder.

## Revendications

1. Pigment intrinsèquement marquable au laser, **caractérisé en ce que** le pigment se trouve sous la forme d'une préparation comprenant un ou plusieurs composés métalliques réductibles choisis dans le groupe constitué par TiO₂ (rutile ou anatase), B₂O₃, Fe₂O₃, SnO₂, Bi₂O₃, les halogénures d'argent, le sulfure de zinc, SnO/SbO, (Sn,Sb)O₂ ou le vanadate de bismuth, et un agent réducteur, et possède une taille de particules de 0,01 - 200 µm, où l'agent réducteur est choisi dans le groupe constitué par la résine mélamine, la résine urée, la résine urée-formaldéhyde, les mélanges de résine mélamine/urée, et le carbone, la proportion d'agent réducteur, sur la base de l'ensemble du pigment, étant de 10-50% en poids et le composé métallique réductible étant en contact direct et intime avec l'agent réducteur.

2. Pigment selon la revendication 1, **caractérisé en ce que** le composé métallique réductible se trouve sous la forme d'une particule sans support.

3. Pigment selon la revendication 1, **caractérisé en ce que** le composé métallique réductible se trouve sous la forme d'un revêtement sur un support.

4. Pigment selon l'une ou plusieurs parmi les revendications 1 à 3, **caractérisé en ce que** le composé métallique réductible est partiellement ou totalement revêtu par un agent réducteur.

5. Pigment selon l'une ou plusieurs parmi les revendications 1 à 3, **caractérisé en ce que** l'agent réducteur est partiellement ou totalement revêtu par un composé métallique réductible.

6. Pigment selon la revendication 1, **caractérisé en ce que** le TiO₂ est un dioxyde de titane dopé ou non dopé.

7. Pigment selon l'une ou plusieurs parmi les revendications 3 à 6, **caractérisé en ce que** le support est choisi dans le groupe constitué par les paillettes de mica, les paillettes de dioxyde de silicium, les paillettes de verre, les paillettes de céramique, les paillettes d'oxyde d'aluminium, les paillettes d'oxyde de fer ou les paillettes de graphite.

8. Pigment selon la revendication 7, **caractérisé en ce que** le support est une paillette de mica ou une paillette de verre.

9. Pigment selon l'une ou plusieurs parmi les revendications 1 à 8, **caractérisé en ce que** le pigment comprend en outre un ou plusieurs absorbants comme composant supplémentaire.

10. Pigment selon la revendication 9, **caractérisé en ce que** l'absorbant est choisi dans le groupe constitué par le noir de carbone, l'antimoine, les oxydes mixtes de Sb/Sn, les paillettes de mica revêtues de (Sn,Sb)O₂, le phosphate d'hydroxyde de cuivre, le phosphate de cuivre, la magnétite, le sulfure de molybdène, l'oxyde de molybdène, BiOCl, les phyllosilicates, les colorants.

11. Pigment selon l'une ou plusieurs parmi les revendications 1 à 10, **caractérisé en ce que** le pigment comprend en outre un ou plusieurs colloïdes protecteurs comme composant supplémentaire.

12. Pigment selon l'une ou plusieurs parmi les revendications 2, 4 à 6 et 9 à 11, **caractérisé en ce que** la particule sans support possède une taille de particules dans la plage allant de 1 nm à 1000 nm.

13. Pigment selon la revendication 12, **caractérisé en ce que** la taille de particules se trouve dans la plage allant de 10 nm à < 100 nm.

14. Procédé de préparation d'un pigment selon l'une ou plusieurs parmi les revendications 1 à 13, **caractérisé en ce qu'**un ou plusieurs composés métalliques réductibles sont partiellement ou totalement revêtus par un agent réducteur ou un agent réducteur est partiellement ou totalement revêtu par un ou plusieurs composés métalliques réductibles, où le composé métallique réductible est choisi dans le groupe constitué par TiO₂ (rutile ou anatase), B₂O₃, Fe₂O₃, SnO₂, Bi₂O₃, les halogénures d'argent, le sulfure de zinc, SnO/SbO, (Sn,Sb)O₂ ou le vanadate de bismuth, et l'agent réducteur est choisi dans le groupe constitué par la résine mélamine, la résine urée, la résine urée-formaldéhyde, les mélanges de résine mélamine/urée, et le carbone, et où la proportion d'agent réducteur, sur la base de l'ensemble du pigment, est de 10-50% en poids.

15. Procédé selon la revendication 14, **caractérisé en ce que** le composé métallique réductible se trouve sous la forme d'une particule sans support ou sous la forme d'un revêtement sur un support et est partiellement ou totalement revêtu par un agent réducteur.

16. Utilisation du pigment selon l'une ou plusieurs parmi les revendications 1 à 13, pour le marquage au laser de systèmes inorganiques et de polymères organiques.

17. Polymère organique comprenant un pigment intrinsèquement marquable au laser selon l'une ou plusieurs parmi les revendications 1 à 13.

18. Polymère selon la revendication 17, **caractérisé en ce que** la proportion de pigment selon l'une ou plusieurs parmi les revendications 1 à 13 dans le polymère est de 0,1 - 30% en poids, sur la base du polymère.

19. Polymère selon la revendication 17 ou 18, **caractérisé en ce que** le polymère est un plastique, un film en plastique, un revêtement de surface, une peinture pour automobiles, un revêtement en poudre, une encre d'impression ou un revêtement pour papier.

20. Procédé de préparation du polymère marquable au laser selon l'une ou plusieurs parmi les revendications 17 à 19, **caractérisé en ce que** le pigment selon l'une ou plusieurs parmi les revendications 1 à 13 est incorporé dans le polymère ou la matrice de polymère à l'aide d'une extrudeuse.
